# EUROPEAN PATENT APPLICATION

(11) **EP 0 933 540 A1**
(43) Date of publication of application: **04.08.1999**
(21) Application number: 97937587.0
(22) Date of filing: 26.08.1997
(51) Int. Cl.: F16C 1/14, F16C 1/26

(54) **CURVED TERMINAL FOR CONTROL CABLES**

(30) Priority: 15.10.1996 ES 9600217
(71) Applicant: FICO CABLES, S.A., 08028 Barcelona (ES)
(72) Inventor: GABAS CEBOLLERO, Carlos, E-08029 Barcelona (ES)
(74) Representative: SUGRANES - VERDONCES - FERREGÜELA
(86) International application number: ES9700213
(87) International publication number: WO9816753

(57) **Abstract**

This curved terminal comprises a sheath terminal (1) and a steel cable terminal (2) provided with means (3) for connection to an associated control mechanism, both terminals (1, 2) being mutually couplable. The sheath terminal (1) comprises a curved tubular extension (29) which, provided with a groove-guide (34), describes a trajectory which is concentric with the trajectory of displacement of the actuation or control mechanism; the steel cable terminal (2) is so adapted that it can slide in both directions (A', B') through the curved tubular extension (29). The steel cable (13) has a coaxial covering (14) which makes contact permanently with the internal face (30) of the curved tubular extension (29). Application to the car industry.

## Description

### Technical field of the invention

The object of the invention is a curved terminal for control cables, which is of particular application to the control cables used in the automobile industry as thrust-traction force-transmission parts, known as push-pull actuating cables.

### Background of the invention

Known in the automobile industry are multiple embodiments of push-pull control cables which, essentially, comprise a steel cable, a sheath which covers the steel cable, at each end of the steel cable a steel cable terminal designed for connection to an actuating control and to its associated mechanism respectively, and on each end of the sheath a sheath terminal which is generally attached to a respective fixed point of the vehicle structure.

The steel cable terminals, once attached to said actuating control or associated mechanism, can follow a rectilinear or curvilinear path in function of the movements made by said actuating control and mechanism during operation thereof. Where the steel cable terminal has to be moved along a curvilinear path, generally a circular path, the usual practice is to use control cables provided with ball-and-socket joint parts, known as swivel tube. Said articulated cables present the main disadvantage of high production cost.

### Explanation of the invention

A curved terminal of new structure and operation for control cables is made known hereby in order to provide a new low-cost embodiment of control cable terminal which allows the steel cable terminal to be moved following a curved path.

The curved terminal of the invention is applicable to control cables which comprise a sheathed steel cable, a sheath terminal and a steel cable terminal, in which the sheath terminal includes a terminal body on which there are means for fixing one sheath end and means for fixing the sheath terminal to a fixed point of the vehicle structure, and the steel cable terminal includes a terminal body provided with means for fixing the corresponding end of the steel cable and means of linking with an actuating control or with its associated mechanism.

The curved terminal of the invention is characterized in that the sheath terminal body is prolonged into a tubular extension on which there is a through guide-slot running longitudinally, while the curved tubular extension describes a path concentric to the path of travel of the actuating control or associated mechanism attached to the steel cable terminal, and in that the body of the steel cable terminal has a transverse linking extension on which are mounted the means for linking with the actuating control or associated mechanism, the body of the steel cable terminal being designed so as to be housed inside the curved tubular extension, with the guide-slot traversing the transverse linking extension, so that once the sheath terminal and the steel cable terminal have been coupled, the latter can slide in both directions through the curved tubular extension.

According to another characteristic of the curved terminal of the invention, the end portion of steel cable fixed to the steel cable terminal body has a coaxial covering fixed to the steel cable and making contact permanently with the internal side of the curved tubular extension.

According to another characteristic of the curved terminal of the invention, the covering of the steel cable has a plurality of grooves running longitudinally, preferably between three and six grooves, forming an equal number of ribs whose exterior ends are designed to establish a narrow zone of contact with the interior side of the tubular extension, the aforesaid grooves permitting lubricating products or bearings to be placed therein.

According to another characteristic of the curved terminal of the invention, the guide-slot has longitudinally mounted on its exterior edges a respective outward-oriented thickened section for structural reinforcement.

### Brief description of the drawings

The drawing sheets of the present specification show the curved terminal of the invention for control cables. In said drawings:
Figure 1 is a side view partially in section of the curved terminal of the invention;
Figure 2 is the view along section II-II of Figure 1;
Figure 3 is the view along section III-III of Figure 1.

### Detailed description of the example of embodiment

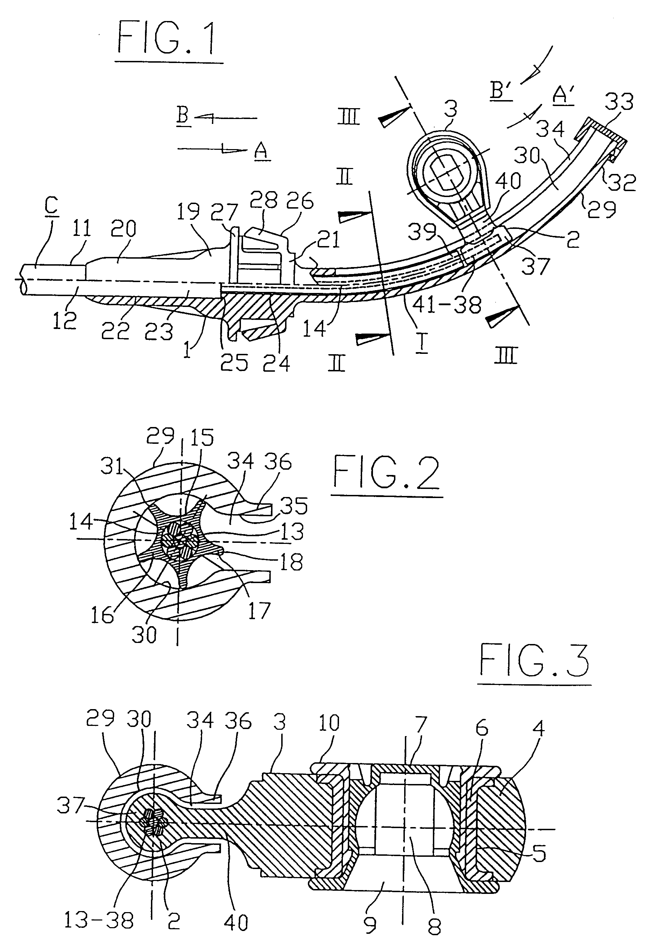

The curved terminal T of the invention for control cables described as an example of embodiment comprises, as shown in Figure 1, a sheath terminal 1 and a steel cable terminal 2 which can be coupled together, the steel cable terminal 2 including linking means 3 with an actuating control or associated mechanism (not shown in the figures of the drawing sheets), such as the lever arm of the gear-shift lever fitted in the passenger compartment of the vehicle and the corresponding gear-change mechanism. In this example of embodiment of the curved terminal T of the invention, the linking means 3 of the steel cable terminal 2 comprise, as shown in section in Figure 3, a ball-and-socket body 4 in which there is an axial through-orifice 5 with a sleeve 6, a bushing 7 which forms a spherical housing 8 designed to receive a ball (not shown) through a truncated-cone inlet mouth 9, and a bushing 7 securing ring 10. It is understood that the linking means 3 can adopt any other configuration suited to each specific case of application without this in any way affecting the essential nature of the invention.

The curved terminal T is applied to one end 11 of a control cable C, made up of a sheath 12, shown in Figure 1, a steel cable 13 shown in section in Figures 2 and 3 and, fixed to the steel cable 13, a covering 14 coaxially fitted as shown in Figure 2, which covering 14 has running longitudinally five equal and regularly distributed grooves 15 with cross section of curved outline and forming an equal number of ribs 16 whose exterior ends 17 have a convex outline 18.

The sheath terminal 1 comprises a terminal body 19 of generally long cylindrical shape on which can be distinguished a front portion 20 and a rear portion 21. To the interior, the front portion 20 includes an axial orifice 22 designed to receive with a snug fit and fix the end 23 of the sheath 12 of the control cable C, while the rear portion 21 has an axial orifice 24 which, linking with the axial orifice 22, forms a stop 25 which acts as stop for the sheath 12, the axial orifice 24 being of dimensions such that the covering 14 fixed to the steel cable 13 can be slid with a snug fit through it in both directions marked A and B in Figure 1. To the exterior, the front 20 and rear 21 portions include respective and complementary means of fixing 26 of the sheath terminal 12 to a fixed point (not shown) of the vehicle structure, such as a dividing wall in which there is a closed housing formed by a through-orifice, which fixing means 26 consist on the front portion 20 in a perimetric projection 27, and on the rear portion 21 in two fixing projections 28 diametrically opposite each other, the whole being designed in such a way that, as is known, once the sheath terminal 1 has been coupled to the fixed point, said dividing wall is situated between the perimetric projection 27 and the fixing projections 28.

Figure 1 shows how the front portion 21 of the terminal body 19 is prolonged into a curved tubular extension 29 which describes a path concentric to the path of travel of the actuating control or associated mechanism attached to the linking means 3 of the steel cable terminal 2. The internal side 30 of the curved tubular extension 29 links with the axial orifice 24 of the rear portion 21, in such a way that the covering 14 of the steel cable 13 can slide with a snug fit through the curved tubular extension 29 in both directions marked A' and B'. The arrangement of the covering 14 and curved tubular extension 29 described permit the steel cable 13 to be permanently and coaxially positioned with respect to the longitudinal axis of the curved tubular extension 29. Figure 2 shows in detail how the sliding of the covering 14 through the curved tubular extension 29 is implemented in such a way that the convex outlines 18 of the exterior ends 17 of the ribs 16 rest on the internal side 30 and establish a narrow zone of contact 31, this layout reducing the abrasion which can arise between the covering 14 and the internal side 30 during sliding of the covering 14. Where necessary, and for the purposes of reducing said abrasion still further, lubricating products or bearings (neither shown) can be used in the grooves 15. In order to prevent the entry of solid bodies and liquids, etc. into the curved tubular extension 29 which might affect correct functioning of the curved terminal T, its exterior end 32 is fitted with a closure piece 33.

The figures of the drawing sheet show how the curved tubular extension 29 has a through guide-slot 34 running longitudinally and having exterior edges 35 with an outward-oriented thickened section 36, which under normal conditions of use of the curved terminal T is destined to prevent deformations which might affect its functioning.

Figures 1 and 3 show that the steel cable terminal 2 includes a terminal body 37 of general cylindrical shape and of dimensions such as to be housed with a snug fit in the curved tubular extension 29, the terminal body 37 having an axial orifice 41, shown by means of broken lines in Figure 1, designed to receive and secure the end 38 of the steel cable 13, as shown in Figure 1 by means of broken lines and Figure 3 in section, leaving the end 39 of the covering 14 of the steel cable 13 at a relatively short distance from the terminal body 37. The terminal body 37 has a transverse linking extension 40 having a cross section of quadrangular outline which links in coplanar fashion with the ball-and-socket body 4 of the above-described linking means 3, which transverse linking extension 40 is so dimensioned as to be received with a snug fit in the guide-slot 34 of the curved tubular extension 29 as shown in Figure 3. The terminal body 37 and the transverse linking extension 40 can slide in both directions A' and B'.

The functioning of the curved terminal T object of the invention which is described as an example of embodiment is very simple and is described in detail below. With the sheath terminal 1 attached to a fixed point of the automobile vehicle structure, and the steel cable terminal 2 attached to an actuating control through the linking means 3, the rotating movements of the actuating control in directions A' and B', describing a circular path, drive the steel cable terminal 2 through the curved tubular extension 29 describing a path concentric to that of the actuating control. During the rotation movements of the steel cable terminal 2 driven by the actuating control, the covering 14 maintains permanent contact with the internal side 30 of the curved tubular extension 29, so that the steel cable 13 maintains a coaxial position with respect to the longitudinal axis of the curved tubular extension 29. The rotating movements of the steel cable terminal 2 in directions A' and B' cause the steel cable 13 to make corresponding movements A, B which are transmitted to the steel cable terminal fitted on the other end (not shown) of the control cable C. In the above description of functioning of the curved terminal T of the invention, it is assumed that the linking means 3 had coupled to them an actuating control whose rotation drove the steel cable terminal 2 through the curved tubular extension 29 of the sheath terminal 1. It is understood that the functioning of the curved terminal T does not differ from that described above where the associated mechanism of the actuating control is coupled to the linking means 3, that is, when the actuating control is coupled to the steel cable terminal of the other end (not shown) of the control cable C, which steel cable terminal can be the curved terminal T of the invention or any other suitable terminal. In this case the movements of the steel cable 13 and covering 14 in directions A, B, driven by said actuating control, cause the steel cable terminal 2 to rotate in a corresponding direction A, B through the curved tubular extension 29 and, consequently, the associated mechanism coupled to the linking means describes a corresponding rotation through a path concentric to that of the curved tubular extension 29.

## Claims

1. Curved terminal for control cables, which is applicable to control cables (C) which comprise a sheathed steel cable (12, 13), a sheath terminal (1) and a steel cable terminal (2), in which the sheath terminal (1) includes a terminal body (19) on which there are means (22) for fixing one sheath end (23) and means (26) for fixing the sheath terminal (1) to a fixed point of the vehicle structure, and the steel cable terminal (2) includes a terminal body (37) provided with means (41) for fixing the corresponding end of the steel cable (38) and means (3) of linking with an actuating control or with its associated mechanism, which is characterized in that the sheath terminal body (19) is prolonged into a curved tubular extension (29) on which there is a through guide-slot (34) running longitudinally, which curved tubular extension (29) describes a path concentric to the path of travel of the actuating control or associated mechanism attached to the steel cable terminal (2), and in that the body of the steel cable terminal (37) has a transverse linking extension (40) on which are mounted the means (3) for linking with the actuating control or associated mechanism, the body of the steel cable terminal (37) being designed so as to be housed inside the curved tubular extension (29), with the guide-slot (34) traversing the transverse linking extension (40), so that once the sheath terminal (1) and the steel cable terminal (2) have been coupled, the latter can slide in both directions (A', B') through the curved tubular extension (29).

2. Curved terminal as claimed in Claim 1, characterized in that the end portion of steel cable (38) fixed to the steel cable terminal body (37) has a coaxial covering (14) fixed to the steel cable (13) and making contact permanently with the internal side (30) of the curved tubular extension (29).

3. Curved terminal as claimed in Claim 2, characterized in that the covering (14) of the steel cable (13) has a plurality of grooves (15) running longitudinally, preferably between three and six grooves (15), forming an equal number of ribs (16) whose exterior ends (17) are designed to establish a narrow zone of contact (31) with the interior side (30) of the tubular extension (29), the aforesaid grooves (15) permitting lubricating products or bearings to be placed therein.

4. Curved terminal as claimed in any of the above Claims, the guide-slot (34) has longitudinally mounted on its exterior edges (35) a respective outward-oriented thickened section (36) for structural reinforcement.
